# EUROPEAN PATENT APPLICATION

(11) **EP 3 272 567 A1**
(43) Date of publication of application: **24.01.2018**
(21) Application number: 16425072.2
(22) Date of filing: 21.07.2016
(51) Int. Cl.: B60K 15/04

(54) **SAFETY ASSEMBLY FOR TANK FILLERS**

(71) Applicant: F.A.R.M.A. S.r.l. Fabricia Accessori Ricambi Moto E Auto, 40059 Medicinia (BO) (IT)
(72) Inventor: Poma, Armando, 40060 Dozza BO (IT)
(74) Representative: Modiano, Micaela Nadia

(57) **Abstract**

A safety assembly for tank fillers, fillers of the type comprising a pipe which is open outward at a first end portion (A) and leads at the opposite end to the tank of a vehicle. Inside the first end portion (A) there is at least one diaphragm, which is normally arranged so as to close the pipe and can move elastically to a configuration for the free passage of fluids, for refueling. The assembly comprises at least one spacer (2), which is crossed by a through channel (3) and can be connected externally and rigidly to the first end portion (A) of the filler at a first end (3a) of the channel (3). Moreover, the assembly (1) comprises at least one closure cap (4), which can be anchored detachably to the spacer (2) at the second end (3b) of the channel (3), which is arranged opposite the first end (3a), in order to define a first active configuration, for hindering access to the filler. The cap (4) is selectively disengageable from the spacer (2), in order to define a second active configuration, for access to the filler, in order to allow refueling of the tank.

## Description

The present invention relates to a safety assembly for tank fillers.

As is known, in the automotive field the filler is the pipe that connects the fuel tank to the outside, providing the user with a practical method of refueling.

In greater detail, along the body of the vehicle there is a lateral opening, which provides access to a recess which the end portion of the filler that lies opposite the tank faces.

By acting on a movable door, which normally is arranged so as to close the opening, the user can thus insert the nozzle of the fuel dispenser in the filler in order to proceed with refueling.

According to traditional methods, this activity cannot be performed before removing a cap, which is arranged so as to close the filler in compliance with the statutory provisions in force.

These statutory provisions in fact require taking measures adapted to prevent the accidental leakage of fuel from the tank even if the vehicle is overturned (obviously to prevent explosions and/or fires in case of accidents). In this sense, the cap evidently allows full compliance with the statutory provisions, since it prevents the passage of fuel, allowing it only by means of its manual removal by the user, often by resorting to a key.

New types of filler, also known as "automatic", are recently becoming widespread and comply with the requirements set by the statutory provisions without resorting to the external cap.

In this case, the vehicles are in fact marketed directly with fillers that do not have a cap and incorporate, along the end portion of the pipe, a diaphragm that is retained elastically so as to close the passage of such pipe. Therefore, as long as the diaphragm is arranged in this configuration, it indeed prevents the passage of fuel and therefore its accidental leakage.

In this embodiment, the diaphragm can oscillate freely and elastically inward, so that it can be pushed automatically into the configuration for free passage by the nozzle of the dispenser only during refueling.

However, this constructive solution is not free from drawbacks.

When the vehicle is moving or parked, and in any case when refueling is not being performed, access to the filler is prevented only by the door arranged along the opening in the vehicle body.

If one considers that this door often can be tampered with easily, and that in some vehicle models in practice there are no mechanisms that hinder its manual movement at all, it is easy to realize that it is far too easy to gain free access to fillers of the automatic type.

This is by now unacceptable, since for vandals and ill-intentioned individuals it is very easy to remove the door and then introduce foreign substances in the tank, simply by forcing the rotation of the diaphragm, with obvious unwelcome consequences.

Even without introducing substances in the tank, the possibility to access the end portion of the tank is in any case dangerous, since any substances or impurities deposited therein (accidentally or intentionally) might easily reach the tank at a later time, for example during refueling.

Moreover, it should be noted that in order to solve the problem described above it is not possible to resort to the caps used in fillers of the traditional type.

These caps in fact have a rather complex structure, since they must accommodate a key-operated device, which is required in order to allow access to the filler only to the chosen user, as well as the mechanisms that allow coupling between the cap and the filler and the valve elements aimed at allowing the venting and in general the adjustment of the pressure in the tank.

Therefore, these caps have an axially symmetrical main body, with a significant axial extension, which is surmounted at one end by a typically disk-like head. The head is intended to remain directed outward and has a slot for the insertion of the key. The body, which accommodates the other components indicated above, extends axially from the head for several centimeters and is therefore intended to be inserted in the end portion of the filler for a significant portion of its length.

However, in automatic fillers, as shown, the end portion of the cap accommodates the diaphragm that is required to prevent the accidental leakage of the fuel: if these caps were installed, therefore, their body would interfere with the diaphragm, rotating it and keeping it in the free passage position, violating the statutory provisions in force and causing a condition of constant danger.

The aim of the present invention is to solve the problems described above, by providing an assembly capable of increasing the safety of automatic fillers of vehicles.

Within this aim, an object of the invention is to provide a kit that is capable of increasing the safety of automatic fillers of vehicles.

Another object of the invention is to provide an assembly that is capable of preventing access to the filler by ill-intentioned individuals, in compliance with the statutory provisions in force.

Another object of the invention is to provide a kit that is versatile and can be used easily for different shapes and dimensions of fillers.

Another object of the invention is to provide an assembly that can be installed on automatic fillers of vehicles without compromising their integrity in any way.

Another object of the invention is to provide an assembly that can be arranged so as to protect the filler in order to prevent even accidental deposits of substances and impurities.

Another object of the invention is to provide an assembly that ensures high reliability in operation.

Another object of the invention is to propose an assembly that adopts a technical and structural architecture that is alternative to those of assemblies of the known type.

Another object of the invention is to provide an assembly that can be obtained easily starting from commonly commercially available elements and materials.

Another object of the invention is to provide an assembly that has low costs and is safe in application.

This aim and these and other objects that will become better apparent hereinafter are achieved by an assembly according to claim 1 and by a kit according to claim 11.

Further characteristics and advantages of the invention will become better apparent from the description of a preferred but not exclusive embodiment of the assembly according to the invention, illustrated by way of nonlimiting example in the accompanying drawings, wherein:
Figures 1 and 2 are sectional views, taken along an axial plane, of the assembly according to the invention and show its connection to an end portion of a filler;

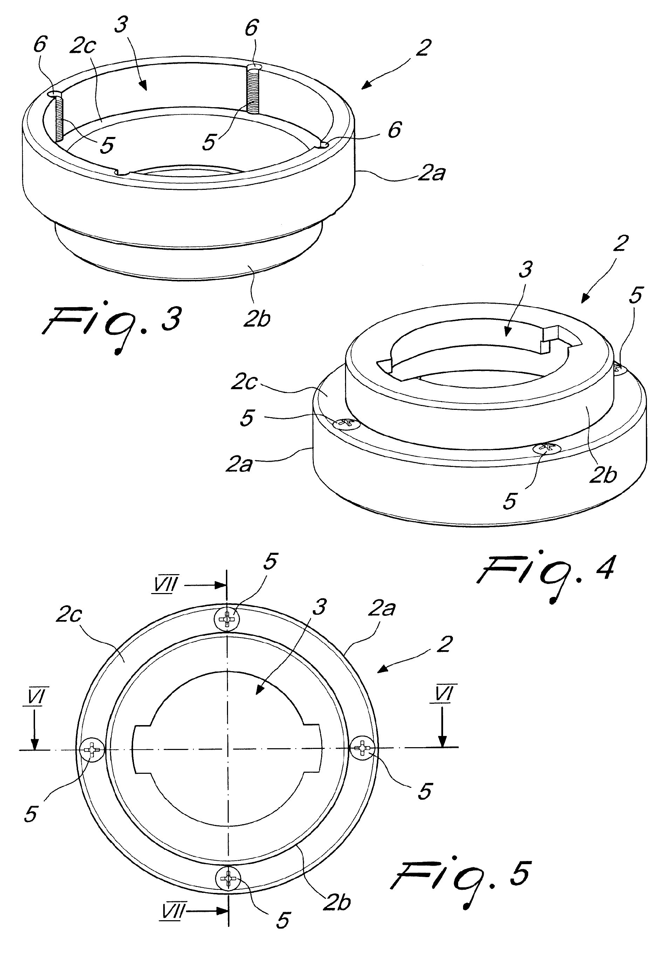

Figure 3 is a perspective view of the spacer taken from below;
Figure 4 is an axonometric view from above of the spacer of Figure 3;
Figure 5 is a top view of the spacer of Figure 3;

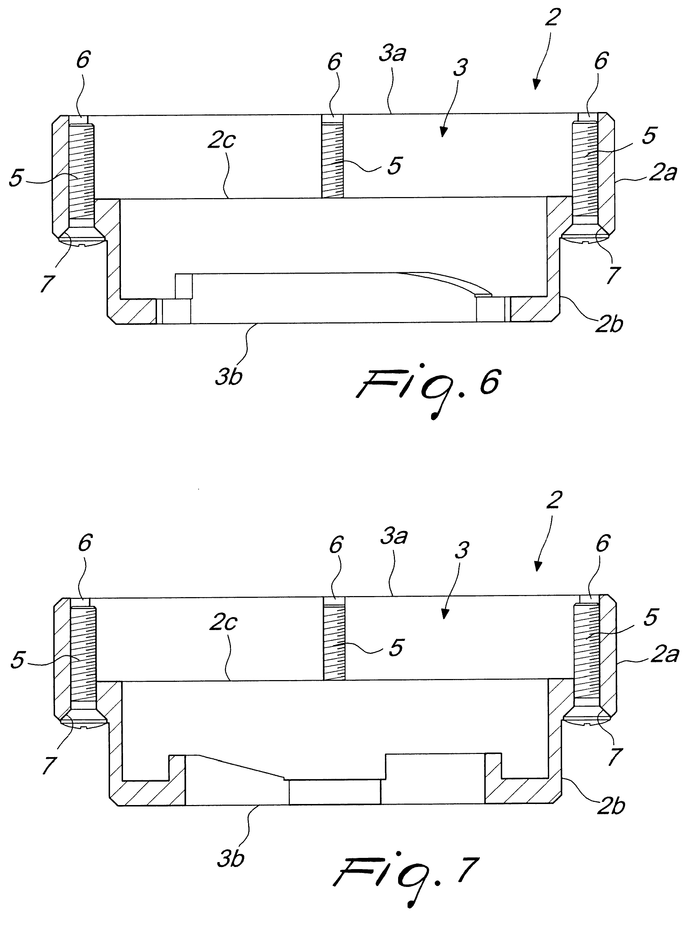

Figure 6 is a sectional view of Figure 5, taken along the line VI-VI, which corresponds to the sectional plane of Figures 1 and 2;
Figure 7 is a sectional view of Figure 5, taken along the line VII-VII;
Figure 8 is an axonometric view of the cap taken from below;
Figure 9 is a perspective view of the cap of Figure 8 taken from above;

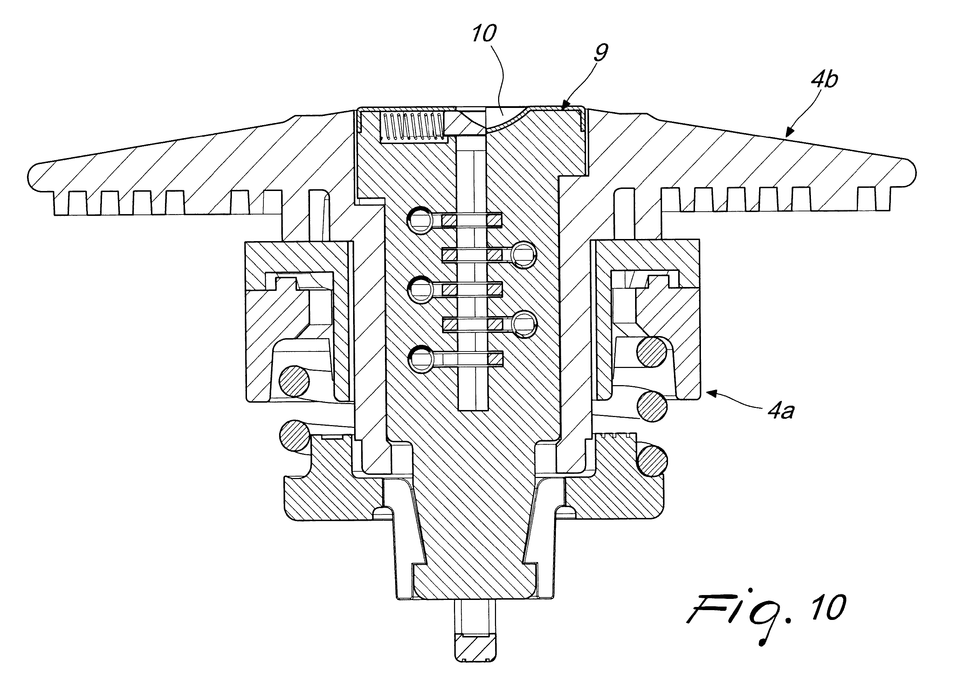

Figure 10 is a sectional view of some components of the cap of Figure 8, taken along the same sectional plane as Figures 1 and 2.

With particular reference to the cited figures, the reference numeral 1 generally designates a safety assembly for tank fillers.

In greater detail, the assembly 1 finds application for fillers which, according to substantially known methods, comprise a pipe which is first of all open outward at a first end portion A (only this first portion A, for the sake of simplicity, is shown in the accompanying figures). At the opposite end, instead, the pipe leads to the tank of a vehicle and indeed allows to refuel such vehicle by inserting a dispensing nozzle in the first end portion A.

It should be noted that the first end portion A faces outward usually, but not necessarily, at a recess that is delimited by an opening in the body, which is normally closed by a door (which indeed can move to ensure that the user can access the recess and the filler).

In even greater detail, it should be specified that the assembly 1 is intended to be used in relation to a specific type of filler, sometimes termed "automatic" in the reference sector: these fillers have, inside the first end portion A, at least one diaphragm, which is normally arranged so as to close the pipe and can move elastically to a configuration for the free passage of fluids, indeed in order to allow refueling.

Hereinafter, therefore, any mention of the fillers and of their first end portion A is to be understood to refer specifically to the "automatic" fillers defined earlier. These fillers may in turn be fitted or intended to be installed on cars or motor vehicles, although their installation (and the installation of the assembly 1 according to the invention) on other vehicles, such as for example trucks, heavy goods vehicles, articulated trucks or others, is not excluded.

According to the invention, the assembly 1 comprises at least one spacer 2, which is crossed by a through channel 3.

The spacer 2 can be connected externally and rigidly to the first end portion A of the filler, at a first end 3a of the channel 3.

Furthermore, the assembly 1 comprises a closure cap 4, which can be anchored detachably to the spacer 2 at a second end 3b of the channel 3, which lies opposite the first end 3a.

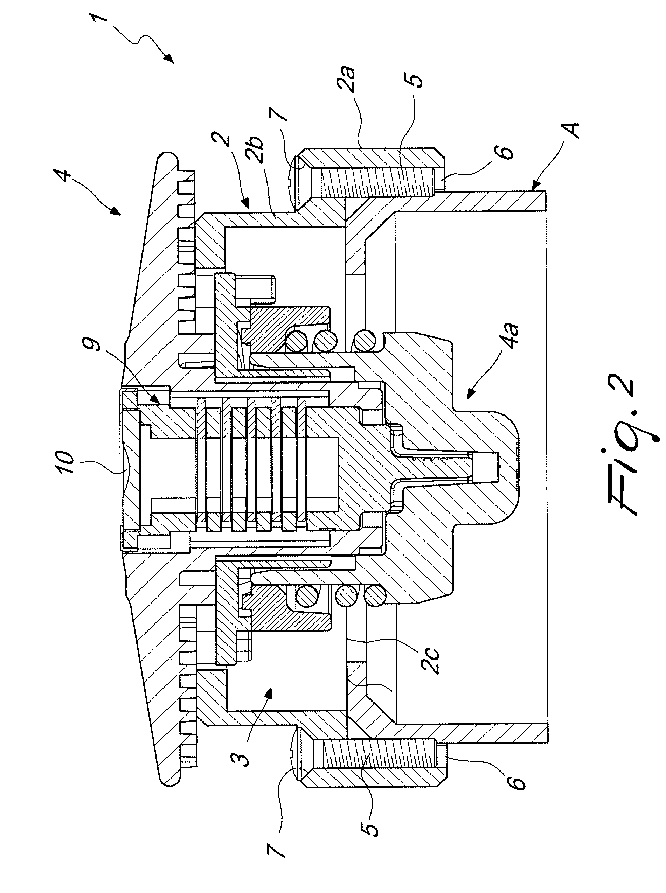

The detachable anchoring thus defines a first active configuration, shown in practice in Figure 2, in which access to the filler is hindered (of course, if at the same time the spacer 2 is rigidly connected to the first portion A). In the first active configuration, therefore, it is possible to prevent third parties from introducing unwanted substances in the tank, and likewise the danger that impurities, dirt or other material might be accidentally or intentionally deposited along the first end portion A is avoided.

Furthermore, the cap 4 can be disconnected selectively from the spacer 2 (even by leaving the latter rigidly connected to the first end portion A), in order to define a second active configuration, in which access to the filler is allowed, in order to allow the refueling of the tank to which such filler leads.

In practice, therefore, after connecting rigidly the spacer 2 to the first portion A of the filler (for example in the manners that will be described hereinafter), the cap 4 can be normally kept in the first configuration, so as to prevent unwanted access to the tank (for example when the vehicle is parked and/or moving).

As a function of the longitudinal size given to the spacer 2, the cap 4 is kept more or less close to the first end portion A of the filler, and it is therefore possible to ensure (in an evidently very practical and easy manner) that the cap 4, in the first configuration, is completely extracted from the first end portion A or is introduced therein for a minimal extent of its length (as in Figure 2), achieving the intended aim. In this manner, the cap 4 in fact does not interfere in any way with the diaphragm contained in the first end portion A (and/or with any other component inside it), therefore leaving its functionalities unaffected but increasing significantly the safety of such filler.

Obviously, when one wishes to refuel, the user can temporarily disengage the cap 4 from the spacer 2 in order to gain access to the filler and proceed with refueling.

In particular, in an embodiment of considerable practical interest, mentioned by way of nonlimiting example of the application of the invention, the spacer 2 is constituted substantially by an axially symmetrical element (as indeed in the accompanying figures), which is crossed axially by the channel 3.

Even more particularly, and with further reference to the accompanying figures, the spacer 2 comprises a first cylindrical segment 2a, which has a larger transverse cross-section, and a second cylindrical segment 2b, which has a smaller transverse cross-section.

The first segment 2a comprises the first end 3a of the channel 3, while the second segment 2b comprises the second end 3b of the channel 3.

Furthermore, the two segments 2a, 2b are mutually aligned (in order to form the channel 3 together) and are blended at an intermediate shoulder 2c.

In any case, it is useful to specify that this specific shape simply constitutes one possible embodiment of the spacer 2; the use of different shapes, without thereby abandoning the protective scope claimed herein, is not excluded.

Conveniently, the assembly 1 according to the invention comprises means for rigid connection by friction of the spacer 2 to the first end portion A of the filler.

In particular, in the preferred (but not exclusive) embodiment, the rigid connection means comprise a plurality of pins 5, of the type of screws (as indeed in the specific embodiment shown in the accompanying figures), stems, nails and the like.

The pins 5 can be interposed with interference between the internal lateral surface of the spacer 2 (of the first segment 2a, for example) and the outer lateral surface of the first end portion A of the filler, when the latter is inserted coaxially and partially in the channel 3 (as can be deduced in particular from Figure 2).

This constructive choice is highly interesting in practice: as can be deduced also from the accompanying figures, the chosen connection method does not entail any modification to the first end portion A of the filler, since the pins 5 remain external to it (as does obviously the spacer 2), indeed ensuring the connection by friction, without requiring holes or other interventions on the end portion A.

Therefore, the assembly 1 achieves the intended aim (already stated in the preceding pages) not only without interfering with the diaphragm and any other elements inside the filler, but more generally without requiring any modification to the latter and therefore without compromising in any way its compliance with the statutory provisions.

It should in fact be noted that any modification applied to the filler might compromise its functionality and/or cause dangerous conditions in various ways: this is indeed avoided by resorting to the assembly 1 according to the invention, which can thus be fitted effectively also on existing fillers (and respective end portions A in particular) even if they are sold separately and/or by different manufacturers.

Even more particularly, in the preferred but not exclusive embodiment, the internal surface of the first segment 2a has a plurality of axial grooves 6, which form respective seats for the pins 5. Each seat is therefore closed longitudinally by the outer lateral surface of the end portion A, when the latter is partially inserted in the channel 3, so as to indeed allow the insertion of the respective pin 5 with interference (thanks to an adequate sizing of the parts involved).

Furthermore, each seat leads to an orifice 7 that is provided along the shoulder 2c, in order to allow indeed the insertion therein of the corresponding pin 5.

It should be noted that the cap 4 can be chosen substantially of a known type and therefore of a type similar to the ones that couple directly to traditional fillers (as would not be possible instead in the automatic fillers for which the assembly 1 according to the invention is intended, since direct coupling would cause interference of the cap with the diaphragm).

In the embodiment proposed merely by way of example in the accompanying figures, the cap 4 has an elongated main body 4a and a flattened head 4b, which has a larger transverse cross-section.

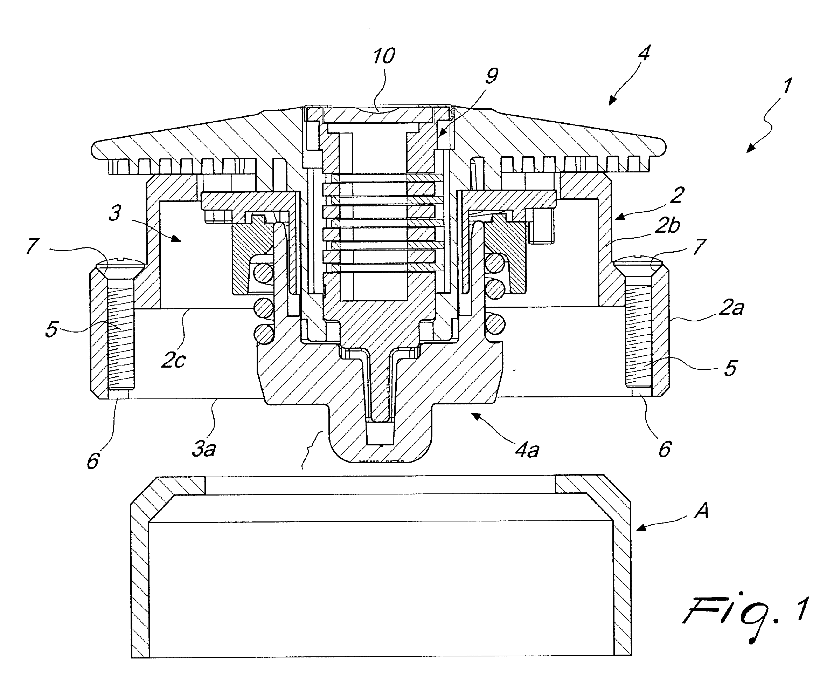

In the first configuration (and as can be deduced from Figures 1 and 2), the body 4a is inserted at least in the channel 3 while the head 4b is pressed against the edge of the second end 3b of the channel 3, in order to prevent access to the filler.

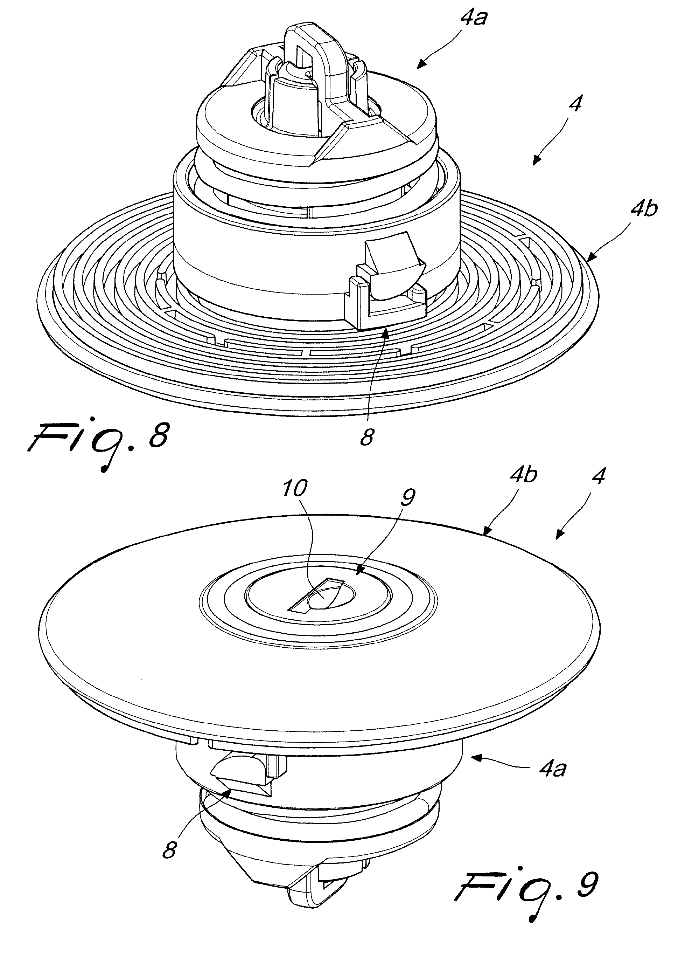

Optionally according to known methods, the body 4a is provided with means 8 (Figures 8 and 9) for interlocking coupling with the cap 4, in order to define the first configuration.

Furthermore (and optionally according to known methods), the cap 4 is provided with a key-operated device 9, which is accommodated inside the body 4a and the head 4b; the device 9 can be activated by means of a respective key, which in turn can be inserted in a slot 10 provided along the head 4b. With activation, the user can thus lock stably the cap 4 on the spacer 2 in the first configuration (and also release it by resorting to the key again).

Furthermore, and even according to known methods, the body 4a is crossed by a through duct, which is closed by at least one adjustment valve, which can move automatically from an arrangement for the free passage of fluids to an arrangement for hindering passage, and vice versa, in order to control the pressure in the tank.

It should be noted therefore that in practice the body 4a is affected by the interlocking coupling means 8, by the key-operated device 9 and by the adjustment valve: these components inevitably force a significant longitudinal dimension for the body 4a (and therefore for the cap 4).

This turns out not to be problematic in any way since, as already mentioned, it is sufficient to size accordingly the spacer 2 to ensure that in any case in the first active configuration the body 4a does not enter the first end portion A or enters it to a minimum extent, as in Figure 2, therefore without interfering with the diaphragm.

It should be noted that preferably the longitudinal dimension of the spacer 2 is chosen as an optimum compromise value: it must in fact be large enough to prevent the body 4a from being able to touch and/or displace the diaphragm, but also smaller than a limit value, beyond which the head 4b would interfere with the door that is normally arranged so as to close the recess which the end portion A faces.

The present invention also relates to a safety kit for tank fillers. The fillers are of the type described above and therefore comprise a pipe, which is open outward at a first end portion A and leads, at the opposite end, to the tank of a vehicle. Furthermore, inside the first end portion A there is at least one diaphragm, which is normally arranged so as to close the pipe and can move elastically to a configuration for the free passage of fluids, for refueling.

According to the invention, the kit comprises a plurality of spacers 2, which have one or more of the particularities shown in the preceding pages and at least one closure cap 4, also according to one or more of the specifications already proposed.

The kit may further provide one or more series of pins 5 (or other rigid connection means) which operate in the manners already described.

Operation of the assembly according to the invention is as follows.

During preliminary installation, the spacer 2 can be anchored rigidly to the first end portion A of the filler.

As shown, the choice to resort to screws, to other pins 5 or in any case to means for rigid connection by friction ensures the integrity of the first portion A: any component thereof, designed to comply with specific statutory provisions or to perform a specific function, can therefore continue to work normally.

Moreover, it should be noted that as long as only the spacer 2 is connected to the first portion A, the user can refuel the vehicle in traditional manners: the spacer 2 in fact is provided with a through channel 3 in which it is possible to insert the nozzle of the dispenser, and from there evidently the nozzle can be inserted in the first portion A.

After connecting the spacer 2 to the first portion A, the user can instead prevent access to the filler by means of the cap 4, which is coupled (detachably) to the spacer 2 and closes the channel 3 with the head 4b.

Indeed thanks to the spacer 2, the cap 4 remains with its head 4b at an adequate distance from such filler, chosen so as to leave the body 4a completely outside the first portion A or insert it in the latter by a minimum extent, which is in any case such as to not interfere with the diaphragm and/or other internal components of the filler.

In practice, therefore, the filler continues to prevent the leakage of the fuel (even if the vehicle overturns) thanks to the diaphragm, the functionalities of which are not impaired in any way.

At the same time, and differently from what occurs in known solutions, the cap 4 prevents ill-intentioned individuals (and in any case third parties who do not have the key) from accessing the end portion A and therefore increases the safety of automatic fillers of vehicles. Furthermore, in the same manner the assembly 1 prevents even accidental deposits of substances and impurities.

Finally, it should be noted that the same assembly 1 (and the kit) can be adapted easily to different operating conditions and/or to different dimensions of the filler (of the first portion A), of the recess and of the door. In this context it is in fact sufficient to change the longitudinal dimension of the spacer 2 (leaving unchanged the other dimensions, as well as the cap 4 and the pins 5) in order to move the cap 4 away from or closer to the end portion A. As an alternative, if it is necessary to work with a filler that has a larger or smaller transverse cross-section, it is sufficient to choose a different spacer 2, which is simply provided with a suitable transverse cross-section (in the first end segment 2a).

Therefore, the kit according to the invention, which for this very purpose comprises two or more spacers 2 (as well as one or more caps 4), can be conceived and marketed with different lengths and/or transverse cross-sections of the spacer 2, so as to be a universal product, which offers the user the possibility of effective use for different types of filler.

In practice it has been found that the assembly and the kit according to the invention achieve fully the intended aim, since the use of a spacer which can be connected externally and rigidly to the first end portion of the filler and at least one closure cap, which can be anchored detachably to the spacer on the opposite side, allows to increase the safety of automatic fillers of vehicles.

The invention thus conceived is susceptible of numerous modifications and variations, all of which are within the scope of the appended claims; all the details may further be replaced with other technically equivalent elements.

In the exemplary embodiments shown, individual characteristics, given in relation to specific examples, may actually be interchanged with other different characteristics that exist in other exemplary embodiments.

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A safety assembly for tank fillers, fillers of the type comprising a pipe which is open outward at a first end portion (A) and leads at the opposite end to the tank of a vehicle, inside the first end portion (A) there being at least one diaphragm, which is normally arranged so as to close the pipe and can move elastically to a configuration for the free passage of fluids, for refueling, **characterized in that** it comprises at least one spacer (2), crossed by a through channel (3) and connectable externally and rigidly to the first end portion (A) of the filler at a first end (3a) of said channel (3), and at least one closure cap (4), which can be anchored detachably to said spacer (2) at a second end (3b) of said channel (3), which is arranged opposite said first end (3a), in order to define a first active configuration, for hindering access to the filler, said cap (4) being selectively disengageable from said spacer (2), in order to define a second active configuration, for access to the filler, in order to allow refueling of the tank.

2. The assembly according to claim 1, **characterized in that** said spacer (2) is constituted substantially by an axially symmetrical element, which is crossed axially by said channel (3).

3. The assembly according to claim 1 or 2, **characterized in that** said spacer (2) comprises a first cylindrical segment (2a) having a larger transverse cross-section, which comprises said first end (3a) of said channel (3), and a second cylindrical segment (2b), having a smaller transverse cross-section, which comprises said second end (3b) of said channel (3), said segments (2a, 2b) being mutually aligned and blended at an intermediate shoulder (2c).

4. The assembly according to one or more of the preceding claims, **characterized in that** it comprises means for rigid connection by friction of said spacer (2) to the first end portion (A) of the filler.

5. The assembly according to claim 4, **characterized in that** said rigid connection means comprise a plurality of pins (5), of the type of screws, stems, nails and the like, which can be interposed with interference between the inner lateral surface of said spacer (2) and the outer lateral surface of the first end portion (A) of the filler, when the first end portion (A) is inserted coaxially and partially in said channel (3).

6. The assembly according to claim 5, **characterized in that** said internal surface of said first segment (2a) has a plurality of axial grooves (6), which form respective seats for said pins (5), each one of said seats being closed longitudinally by the outer lateral surface of the first end portion (A), when the end portion (A) is inserted partially in said channel (3), and leading to an orifice (7) that is provided along said shoulder (2c), for the insertion of the corresponding said pin (5).

7. The assembly according to one or more of the preceding claims, **characterized in that** said cap (4) has an elongated main body (4a) and a flattened head (4b), which has a larger transverse cross-section, in said first configuration said body (4a) being inserted at least in said channel (3) and said head (4b) being pressed against the edge of said second end (3b), in order to prevent access to the filler.

8. The assembly according to claim 7, **characterized in that** said body (4a) is provided with means (8) for interlocking coupling with said cap (4), in order to define said first configuration.

9. The assembly according to claim 7 or 8, **characterized in that** said cap (4) has a key-operated device (9), which is accommodated within said body (4a) and said head (4b) and can be activated by means of a respective key which can be inserted in a slot (10) provided along said head (4b), for the stable locking of said cap (4) on said spacer (2) in said first configuration.

10. The assembly according to one or more of claims 7 to 9, **characterized in that** said body (4a) is crossed by a through duct, which is closed by at least one adjustment valve, which can move automatically from an arrangement for the free passage of fluids to an arrangement for hindering passage, and vice versa, in order to control the pressure in the tank.

11. A safety kit for tank fillers, fillers of the type comprising a pipe, which is open outward at a first end portion (A) and leads at the opposite end to the tank of a vehicle, inside the first end portion (A) there being at least one diaphragm, normally arranged so as to close the pipe and movable elastically to a configuration for the free passage of fluids, for refueling, **characterized in that** it comprises a plurality of spacers (2) according to one or more of the preceding claims and at least one closure cap (4) according to one or more of the preceding claims.
